Europäisches Patentamt

European Patent Office

Office européen des brevets

(11) Veröffentlichungsnummer: **0 310 793 B1**

(12)

# EUROPÄISCHE PATENTSCHRIFT

(19)

(45) Veröffentlichungstag der Patentschrift: **12.02.92**

(21) Anmeldenummer: **88113354.0**

(22) Anmeldetag: **17.08.88**

(51) Int. Cl.⁵: **B23K 26/04**, B23Q 35/10, B23K 26/00

(54) **Laserschweissgerät zum Schweissen von Hohlprofilen und Flachprofilen.**

(30) Priorität: **07.10.87 DE 8713471 U**

(43) Veröffentlichungstag der Anmeldung:
**12.04.89 Patentblatt 89/15**

(45) Bekanntmachung des Hinweises auf die
Patenterteilung:
**12.02.92 Patentblatt 92/07**

(84) Benannte Vertragsstaaten:
**BE DE FR GB IT NL**

(56) Entgegenhaltungen:
**EP-A- 1 208 564**
**EP-A- 1 209 488**
**LU-A- 66 280**
**US-A- 4 577 499**

(73) Patentinhaber: **Rofin-Sinar Laser GmbH**
**Berzeliusstrasse 87**
**W-2000 Hamburg 74(DE)**

(72) Erfinder: **Armier, Karl-Heinz, Dipl.-Ing.**
**Masch.bau.**
**Gropiusring 10**
**W-2000 Hamburg 60(DE)**
Erfinder: **Müller, Bernhard**
**Süntelstrasse 164**
**W-2084 Rellingen 1(DE)**

(74) Vertreter: **Glawe, Delfs, Moll & Partner Patent-**
**anwälte**
**Postfach 26 01 62 Liebherrstrasse 20**
**W-8000 München 26(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft ein Laserschweißgerät zum Schweißen von Hohlprofilen und stumpf aneinander zu schweißenden Flachprofilen mit einer mit den Ablenkspiegeln für gemeinsame Schwenkbewegung verbundenen Detektionseinrichtung für eine oder beide der zu verschweißenden Kanten und mit einer Nachführeinrichtung für den quer zur Schweißnahtrichtung verstellbaren Schweißkopf, der schräg zur Laserstrahlachse angeordnete, um diese Achse schwenkbare Ablenkspiegel für das Laserlicht aufweist.

Beim Schweißen ist es allgemein wichtig, daß der Schweißkopf exakt an den Kanten entlanggeführt wird, an denen die Schweißung erfolgen soll. Beim Schweißen mit Schweißbrennern, bei denen mit breiten Schweißfugen und normalerweise mit Zuschlagmaterial gearbeitet wird, so daß eine verhältnismäßig große Toleranz sowohl im Schweißstoß als auch in der Nahtverfolgung zulässig ist, ist es bekannt, eine mechanische Abtastung durchzuführen, deren Ergebnis in ein elektrisches Steuersignal umgesetzt wird, mit dem Servomotoren gesteuert werden (US-A-4 577 499). Dieses Verfahren ist einerseits kompliziert und auch ungenau. Dieses Verfahren ist bei automatischen Laserschweißgeräten nicht zu verwenden, da wegen des sehr kleinen Laserlichtflecks auch eine sehr genaue Einstellung dieses Lichtflecks in bezug auf die zu verschweißenden Kanten notwendig ist. So ist es erforderlich, den fokussierten Laserstrahl mit einer Toleranz von 0,05 mm oder noch weniger in der Nahtlage nachzuführen.

Bei bekannten Systemen wird dies durch eine optische Abtastung und eine elektronische Nachregelung erreicht. Eine entsprechende Anlage ist sehr schmutzempfindlich, da aus offensichtlichen Gründen bei Verschmutzung der optischen Einrichtung eine optische Abtastung nicht mehr oder nur noch ungenau möglich ist. Diese bekannte Anlage ist weiterhin sehr teuer und nur für mittlere Schweißgeschwindigkeiten verwendbar, da die Nachregelung einerseits sehr schnell sein muß und andererseits ein Überschwingen bei der Nachregelung vermieden werden muß.

Bei einem bekannten Laserschweißgerät der eingangs genannten Art (EP-A-0 209 488) wird als Detektionseinrichtung ein kapazitiver oder induktiver Sensorring verwendet. Dieser hat aber den Nachteil, daß es durch das Schweißplasma beeinflußt wird oder das Schweißplasma beeinflußt. Außerdem verspritzt dieses Plasma dampfförmiges und flüssiges Metall in die nähere Umgebung der Schweißstelle. Das Plasma strahlt große Wärme ab. Die flüssigen Metallspritzer benetzen die Sensoren, woraus eine Änderung der elektrischen Widerstände, Leitwerte und Kapazitätswerte erfolgt, die wiederum den Regelkreis außer Kontrolle geraten lassen. Die vorbekannte Vorrichtung dürfte daher einigermaßen zuverlässig nur beim Laserschneiden arbeiten, da dabei das flüssige Metall durch den Schneidgasdruck nach unten ausgeblasen wird.

Es ist auch bekannt, beim Laserschweißen eine erzwungene Positionierung des Werkstückes, nämlich des Nahtstoßes in bezug auf den Laserstrahl durchzuführen (EP-A1-0 215 404). Dabei wird sehr dünnes Material in sehr kurzen Platinen (Zargen) an einer Referenzfläche (Klinge) geführt. Dieses Verfahren ist für Materialstärken oberhalb von mehr als ungefähr 0,5 mm Dicke aber nicht mehr anwendbar, da die Umformkräfte derart groß werden, daß auch die Klinge wesentlich dicker werden müßte. Da die Klinge aber im wesentlichen die Dicke der Materialstärke haben muß, wird auch der Schweißspalt entsprechend breiter, so daß ein Verschweißen mit einem Laser nicht mehr möglich ist. Bei höheren Schweißgeschwindigkeiten würde außerdem ein sehr hoher Verschleiß durch Reibung erfolgen, so daß ein endloses Schweißen gar nicht möglich ist.

Die Aufgabe der Erfindung besteht darin, ein Laserschweißgerät zu schaffen, bei dem die Nachregelung mit geringem Aufwand sehr präzise und unabhängig von der jeweiligen Schweißgeschwindigkeit erfolgt.

Die erfindungsgemäße Lösung besteht darin, daß die Detektionseinrichtung als mechanischer Taster ausgebildet ist und daß der Taster in einen durch Andrückelemente definierten einstellbaren Schlitz zwischen den zu verschweißenden Kanten eingreift.

Durch die Ablenkspiegel wird der Laserstrahl in der Nähe der gewünschten Schweißstelle aus der ursprünglichen Laserstrahlachse abgelenkt. Diese Ablenkung kann durch Drehen der schwenkbaren Ablenkspiegel verändert werden. Die Nachführung des Laserstrahls kann dann lediglich durch Verdrehen dieser Ablenkspiegel erfolgen, ohne daß es notwendig ist, den ganzen sehr schweren Laser nachzuführen oder aber das Werkstück quer zur Schweißnahtrichtung nachzuführen, was beides sehr aufwendig, teuer und langsam wäre.

Weiter ist die Detektionseinrichtung als mechanischer Taster ausgebildet. Es werden also die Nachteile wie hoher Preis und Störungsempfindlichkeit der optischen Systeme vermieden. Schließlich ist der Taster mit den Ablenkspiegeln bzw. einem entsprechenden Gehäuse im wesentlichen starr für gemeinsame Schwenkbewegung verbunden. Bewegt sich der Taster also aufgrund von Unregelmäßigkeiten der Kanten nach einer Seite, so werden die Ablenkspiegel und die damit verbundenen optischen Teile sowie der Laserstrahl unmittelbar und sofort dieser Abweichung folgen. So ist auf sehr einfache Weise sichergestellt, daß die Schweißung immer genau an der richtigen Stelle erfolgt.

Zweckmäßigerweise wird man zwei Ablenkspiegel verwenden, durch die der Laserstrahl zwar seitlich versetzt wird, aber doch immer noch parallel zum ursprünglichen Laserstrahl ist.

Wenn der Taster in einer eine zum Werkstück senkrechte Bewegung ermöglichenden Führung gehalten ist, so kann er Unebenheiten des Werkstücks folgen. Zweckmäßigerweise ist dabei der Taster in Richtung zum Werkstück federbelastet.

Als besonders zweckmäßig hat es sich erwiesen, den Taster in einer Führung zu befestigen, die einerseits eine Bewegung in Richtung senkrecht zum Werkstück ermöglicht, andererseits aber auch eine dazu senkrechte Bewegung in Querrichtung zur Schweißnaht. Als besonders vorteilhaft hat sich hier ein Kreuzrollentisch oder dergleichen erwiesen.

Wenn eine quer zur Naht angeordnete Führung mit einer Arretierung für den Taster oder damit verbundene Teile vorgesehen ist, kann der Schweißkopf bzw. Laserstrahl seitlich relativ zum Taster einjustiert werden. Dabei ist als Arretierung eine Justierschraube besonders zweckmäßig.

Vorteilhafterweise ist der Taster als Tastrolle ausgebildet. Es ist jedoch auch möglich, den Taster als Nadel oder Gleitmesser auszubilden.

Zweckmäßigerweise verwendet man vier Andrückrollen, um die zu verschweißenden Kanten gegeneinander zu drücken. Dieses Zusammendrücken erfolgt zunächst durch zwei Andrückrollen, hinter denen sich der Spalt zwischen den beiden zu verschweißenden Kanten wieder ein wenig öffnet. An dieser Stelle des sich wieder öffnenden Schlitzes kann der Taster eingreifen und die Schweißung durchgeführt werden. In Arbeitsrichtung dahinter sind dann zwei weitere Andrückrollen vorgesehen. Diese beiden letztgenannten Andrückrollen können auch durch Gleitbacken oder Kugelbüchsenlager ersetzt werden.

Die Erfindung wird im folgenden anhand von vorteilhaften Ausführungsformen unter Bezugnahme auf die beigefügten Zeichnungen beschrieben. Es zeigen:

Fig. 1 in perspektivischer Ansicht den allgemeinen Aufbau des erfindungsgemäßen Laserschweißgerätes;

Fig. 2 bis 4 verschiedene Arten der Ablenkung des Laserstrahls mit Hilfe von Ablenkspiegeln;

Fig. 5 die Führungseinrichtungen für den Taster im größeren Detail und in perspektivischer Ansicht;

Fig. 6 eine schematische Draufsicht zur Verdeutlichung der geometrischen Verhältnisse; und

Fig. 7 und 8 abgewandelte Formen der Einrichtungen, mit denen die zu verschweißenden Gegenstände gehalten werden.

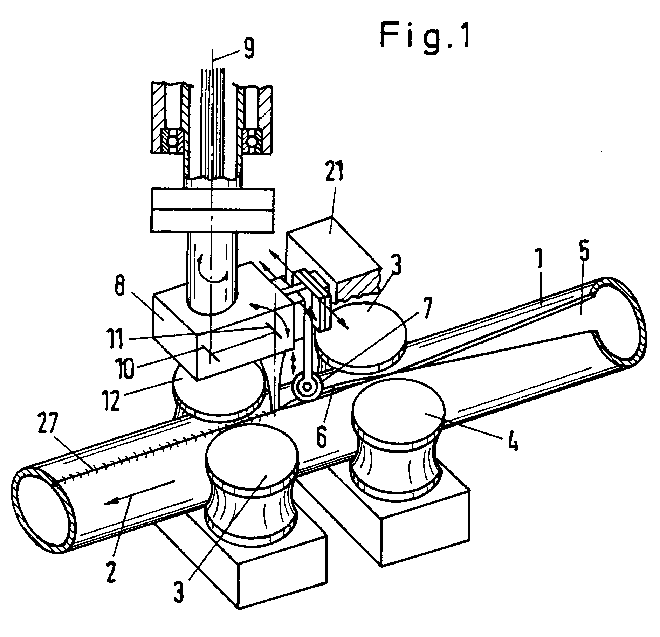

In Fig. 1 ist gezeigt, wie ein mit einer Längsschweißnaht zu versehendes Rohr 1 durch ein Laserschweißgerät in Richtung des Pfeiles 2 geführt wird. Zu diesem Zweck wird es zunächst von zwei Rollen 3, 4, die noch mit nicht gezeigten Antrieben versehen sein können, soweit zusammengedrückt, bis sich die entgegengesetzten Ränder des zusammengebogenen Rohres berühren. Hinter diesem Rollenpaar 3, 4 wird sich der Spalt 5 der Rohrnaht ein wenig wieder zu einem Spalt 6 aufgrund der elastischen Eigenschaften des Rohrmaterials öffnen. In diesem Bereich des Spaltes 6 wird nun die genaue Lage dieses Spaltes 6 bzw. der Ränder des Rohrmaterials mit einer Tastrolle 7 abgetastet. Ist der Spalt 6 seitlich versetzt, so wird auch die Tastrolle 7 seitlich versetzt und dadurch ein Gehäuse 8, das um die Laserlichtachse 9 schwenkbar ist, seitlich verschwenken. Dadurch wird der Laserlichtstrahl, der durch zwei Ablenkspiegel 10, 11 achsversetzt nach unten gerichtet ist, ebenfalls seitlich verschieben, so daß der fokussierte Laserstrahl genau auf die gewünschte Stelle trifft. Anschließend gelangt dieser verschweißte Bereich dann zwischen zwei weitere Rollen 12, 13, wobei im allgemeinen der Abstand zwischen Schweißpunkt und diesen Rollen 12, 13 groß genug gewählt wird, daß hier das durch den Schweißvorgang aufgeschmolzene Material nicht mehr plastisch ist. Die fertige Schweißnaht ist noch bei 27 gezeigt.

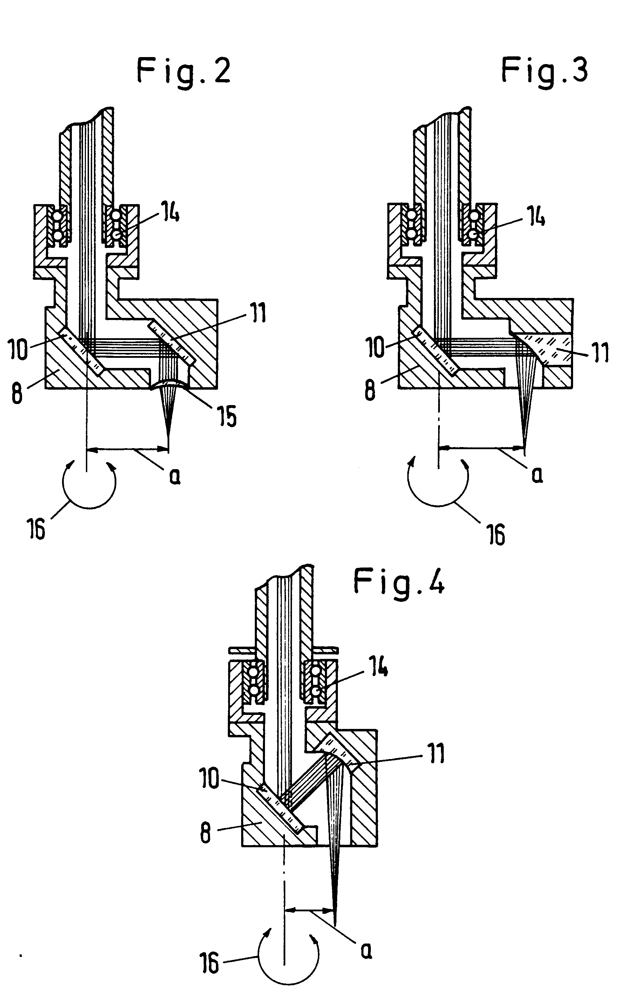

In den Fig. 2 bis 4 sind drei Arten von Ablenkung des Laserstrahls gezeigt. In jedem Falle erkennt man einen unteren Gehäuseteil 8, der um die Achse des Laserlichtes schwenkbar ist, zum Beispiel mit Hilfe von Lagern 14.

Bei der Ausführungsform der Fig. 2 trifft der Laserstrahl zunächst auf einen unter 45° angeordneten Planspiegel 10 und anschließend auf einen weiteren Planspiegel 11, der ebenfalls unter 45° angeordnet ist. Das so zweimal abgelenkte Laserlicht wird dann durch eine Fokussierlinse 15 fokussiert. Dreht man den Gehäuseteil 8 in Richtung des Doppelpfeiles 16, so beschreibt der fokussierte Laserstrahl einen Kreisbogen mit dem Radius a.

Bei der Ausführungsform der Fig. 3 ist ebenfalls ein unter 45° angeordneter Planspiegel 10 vorgesehen. Der weitere Spiegel 11 ist aber ein 90°-Parabol-Spiegel (Off-axis-Spiegel), dessen eine Krümmung kreisförmig ist. Bei dieser Anordnung kann auf eine separate Fokussierlinse 15 verzichtet werden.

Bei der Ausführungsform der Fig. 4 ist der Planspiegel 10 nicht unter 45° ausgerichtet, sondern mehr zur Laserachse hin geneigt. Der zweite Spiegel 11 ist ein Vollparaboloid-Spiegel. Bei allen drei Ausführungsformen wird aber ein Laserstrahl erhalten, der durch Verschwenken des Gehäuses 8 auf einem Kreisbogenstück mit dem Radius a verschwenkt werden kann.

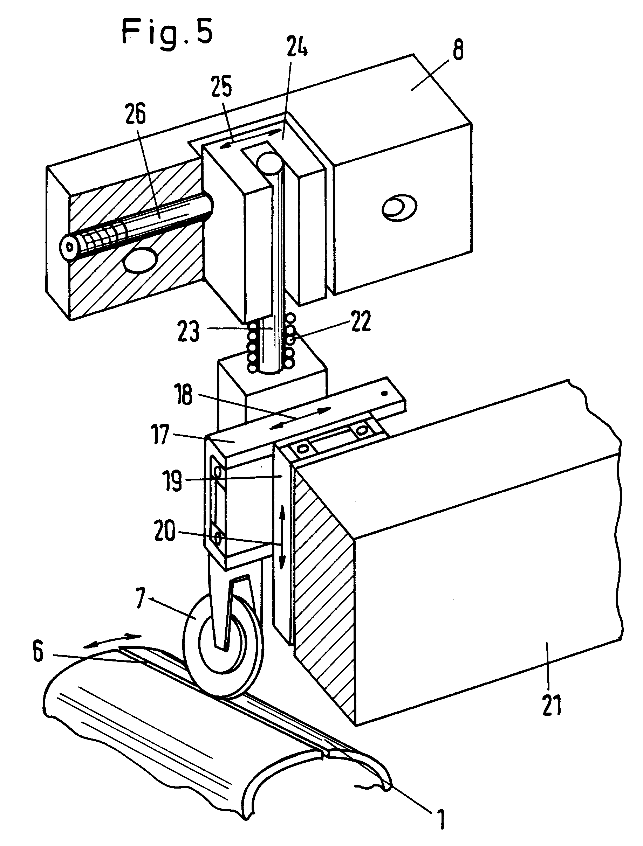

In Fig. 5 sind die Einzelheiten der Führung der Tastrolle 7 im Prinzip dargestellt. Die Tastrolle 7 ist an einem ersten Gleitelement 17 befestigt, das sich in waagerechter Richtung in Richtung des Doppelpfeiles 18 bewegen kann und zu diesem Zweck in einem Gleitelement 19 gleitend befestigt ist. Dieses Gleitelement 19 wiederum kann sich in Richtung des Doppelpfeiles 20 in senkrechter Richtung bewegen und ist zu diesem Zweck gleitend an einem Träger 21 oder dergleichen befestigt, der sich über das Rohr 1 erstreckt. Die Teile 17 und 19 bilden dabei einen Kreuzrollentisch oder dergleichen. Über diese Kreuzrollenführung, Kreuzgleitführung oder dergleichen wird die Rolle 7 durch eine Schraubenfeder 22 nach unten gegen das Werkstück 1 gedrückt. Diese Feder 22 ist auf einem Stift 23 angeordnet und stützt sich am Gehäuse 8 des Schweißkopfes oder einem damit verbundenen Teil ab. Dieser damit verbundene Teil ist ein Element 24, das in Richtung des Doppelpfeiles 25 eine Bewegung in Horizontalrichtung ausführen kann, wobei der genaue Ort in Horzizontalrichtung durch eine Justierschraube 26 festgelegt wird. Dadurch ist die ursprüngliche Justierung möglich, um den Schweißkopf in Querrichtung richtig auf den Ort der Tastrolle 7 einzustellen.

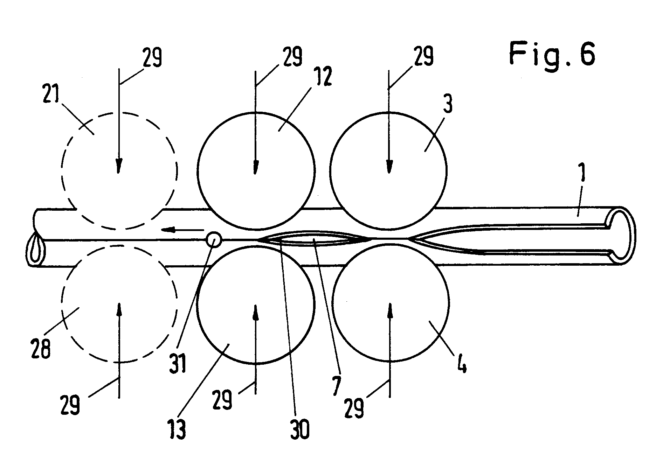

Geometrische Einzelheiten erkennt man auch noch aus Fig. 6. Dort sind neben den Andrückrollen 3, 4, 12 und 13 gestrichelt auch noch zwei weitere Führungsrollen 27 und 28 für das Rohr 1 dargestellt. Alle diese Andrückrollen oder Führungsrollen werden in Richtung der Pfeile 29 in Richtung auf das Rohr 1 aufeinander zugedrückt. Der Ort der Tastrolle ist mit 7 bezeichnet, der Ort, an dem der fokussierte Laserstrahl auf das Werkstück trifft mit 30. 31 bezeichnet die Drehachse für das Gehäuse 8, wobei diese Drehachse 31 mit der ursprünglichen Achse des Laserlichtes zusammenfällt. Wie man deutlich erkennt, führt eine gewisse Auslenkung der Tastrolle 7 zu einer etwas kleineren Auslenkung des fokussierten Laserstrahls 30. In welchem mathematischen Verhältnis diese Auslenkungen miteinander stehen, kann leicht mit Hilfe des Strahlensatzes bestimmt werden. Durch Änderung des Ortes der Tasterrolle 7 können dabei die entsprechenden mathematischen Verhältnisse zwischen Tasterauslenkung und Laserstrahlauslenkung noch verändert werden.

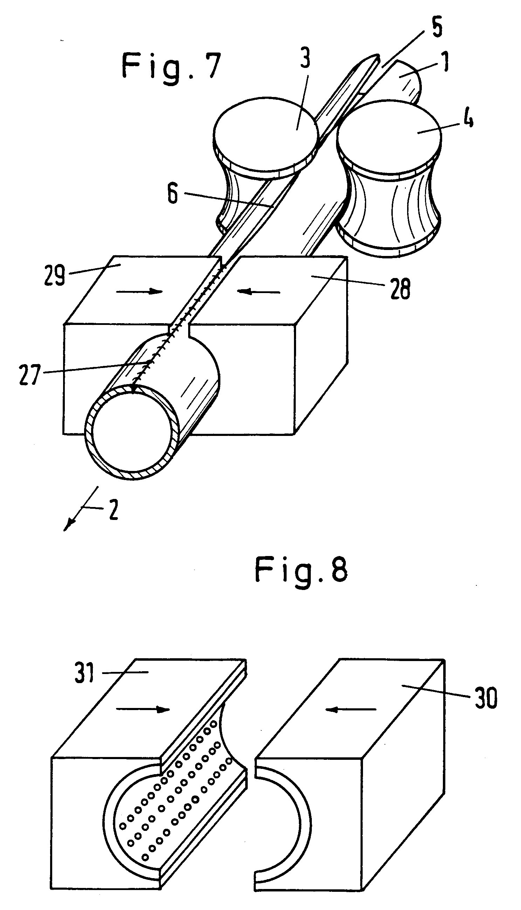

Bei der in der Fig. 7 gezeigten Ausführungsform ist das zweite Paar von Andrückrollen 12, 13 durch Gleitbacken 28, 29 ersetzt, in denen das Rohr 1 in Richtung des Pfeiles 2 gleiten kann. Statt der Gleitbacken 28, 29 können auch Kugelbüchsenlager 30, 31 verwendet werden, die in Fig. 8 gezeigt sind.

**Patentansprüche**

1. Laserschweißgerät zum Schweißen von Hohlprofilen (1) und stumpf aneinander zu schweißenden Flachprofilen mit einer mit den Ablenkspiegeln (10,11) für gemeinsame Schwenkbewegung verbundenen Detektionseinrichtung (7) für eine oder beide der zu verschweißenden Kanten und mit einer Nachführeinrichtung (7,10,11) für den quer zur Schweißnahtrichtung verstellbaren Schweißkopf, der schräg zur Laserstrahlachse (9) angeordnete, um diese Achse (9) schwenkbare Ablenkspiegel (10,11) für das Laserlicht aufweist, dadurch gekennzeichnet, daß die Detektionseinrichtung als mechanischer Taster (7) ausgebildet ist und daß der Taster (7) in einen durch Andrückelemente (3,4,12,13,28,29,30,31) definierten einstellbaren Schlitz (6) zwischen den zu verschweißenden Kanten eingreift.

2. Laserschweißgerät nach Anspruch 1, dadurch gekennzeichnet, daß die Andrückelemente Andrückrollen (3,4,12, 13) sind.

3. Laserschweißgerät nach Anspruch 1, dadurch gekennzeichnet, daß die Andrückelemente aus zwei Andrückrollen (3,4) und zwei Gleitbacken (28,29) bestehen.

4. Laserschweißgerät nach Anspruch 1, dadurch gekennzeichnet, daß die Andrückelemente aus Andrückrollen (3,4) und Kugelbüchsenlagern (30,31) bestehen.

5. Laserschweißgerät nach einem der Ansprüche 1 bis 4, dadurch gekennzeichnet, daß der Taster (7) in einer eine zum Werkstück (1) senkrechte Bewegung ermöglichenden Führung (19) gehalten ist.

6. Laserschweißgerät nach Anspruch 5, dadurch gekennzeichnet, daß der Taster (7) in Richtung zum Werkstück (1) federbelastet ist.

7. Laserschweißgerät nach einem der Ansprüche 1 bis 6, dadurch gekennzeichnet, daß der Taster (7) an einem Kreuzrollentisch oder Kreuzschlitten (17,19) befestigt ist.

8. Laserschweißgerät nach einem der Ansprüche 1 bis 7, dadurch gekennzeichnet, daß eine quer zur Naht (27) angeordnete Führung mit einer Arretierung (26) für den Taster (7) oder damit verbundene Teile vorgesehen ist.

9. Laserschweißgerät nach Anspruch 7, dadurch gekennzeichnet, daß die Arretierung eine Justierschraube (26) aufweist.

10. Laserschweißgerät nach einem der Ansprüche 1 bis 9, dadurch gekennzeichnet, daß der Taster als Tastrolle (7) ausgebildet ist.

**Claims**

1. A laser welding device for welding hollow profiles (1) and flat profiles to be butt-welded to one another, having a detection means (7) for one or both of the edges to be welded, which detection means is connected to deflection mirrors (10, 11) for common pivotal movement and which has a tracking means (7, 10, 11) for the welding head, the latter being displaceable transversely to the direction of the weld seam and being provided with deflection mirrors (10, 11) for the laser light, which mirrors are disposed obliquely to the laser beam axis (9) and are pivotable about this axis (9), characterised in that the detection means is in the form of a mechanical sensor (7) and in that the sensor (7) engages in an adjustable slot (6) disposed between the edges to be welded and defined by pressure members (3, 4, 12, 13, 28, 29, 30, 31).

2. A laser welding device according to Claim 1, characterised in that the pressure members are pressure rollers (3, 4, 12, 13).

3. A laser welding device according to Claim 1, characterised in that the pressure members comprise two pressure rollers (3, 4) and two slide jaws (28, 29).

4. A laser welding device according to Claim 1, characterised in that the pressure members comprise pressure rollers (3, 4) and spherical bush bearings (30, 31).

5. A laser welding device according to any one of Claims 1 to 4, characterised in that the sensor (7) is retained in a guide (19) which makes it possible for movement perpendicular to the workpiece (1) to take place.

6. A laser welding device according to Claim 5, characterised in that the sensor (7) is spring-loaded in the direction of the workpiece (1).

7. A laser welding device according to any one of Claims 1 to 6, characterised in that the sensor (7) is mounted on a cross roller table or a compound slide (17, 19).

8. A laser welding device according to any one of Claims 1 to 7, characterised in that a guide disposed transversely to the seam (27) is provided with a locating means (26) for the sensor (7) or members connected therewith.

9. A laser welding device according to Claim 7, characterised in that the locating means has an adjusting screw (26).

10. A laser welding device according to any one of Claims 1 to 9, characterised in that the sensor is in the form of a sensing roller (7).

**Revendications**

1. Appareil de soudage au laser pour souder des profilés creux (1) et des profilés plats devant être soudés bord à bord, comportant un dispositif de détection (7) pour l'un ou l'un et l'autre des bords à souder, raccordé aux miroirs de déflexion (10, 11) en vue d'un mouvement pivotant commun, ainsi qu'un dispositif suiveur (7, 10, 11) pour la tête de soudage qui est mobile perpendiculairement à la direction du cordon de soudure et qui présente, pour la lumière laser, des miroirs de déflexion (10, 11) disposés obliquement par rapport à l'axe (9) du faisceau laser et susceptibles de pivoter autour de cet axe (9), caractérisé en ce que le dispositif de détection est réalisé sous forme de palpeur mécanique (7) et en ce que le palpeur (7) s'engage dans une fente réglable (6) entre les bords à souder, définie par des éléments presseurs (3, 4, 12, 13, 28, 29, 30, 31).

2. Appareil de soudage au laser selon la revendication 1, caractérisé en ce que les éléments presseurs sont des galets de pression (3, 4, 12, 13).

3. Appareil de soudage au laser selon la revendication 1, caractérisé en ce que les éléments presseurs sont constitués par deux galets de pression (3, 4) et deux blocs de glissement (28, 29).

4. Appareil de soudage au laser selon la revendication 1, caractérisé en ce que les éléments presseurs sont constitués par des galets de pression (3, 4) et des blocs-paliers à billes (30, 31).

5. Appareil de soudage au laser selon l'une quelconque des revendications 1 à 4, caractérise en ce que le palpeur (7) est maintenu dans un guide (19) qui rend possible un mouvement perpendiculaire à la pièce à souder (1).

6. Appareil de soudage au laser selon la revendication 5, caractérisé en ce que le palpeur (7) est sollicité élastiquement en direction de la pièce à souder (1).

7. Appareil de soudage au laser selon l'une quelconque des revendications 1 à 6, caractérisé en ce que le palpeur (7) est fixé à une table à galets à mouvements croisés ou à un chariot à deux glissières croisées (17, 19).

8. Appareil de soudage au laser selon l'une quelconque des revendications 1 à 7, caractérisé en ce qu'il est prévu un guide disposé transversalement par rapport au cordon de soudure (27), comportant un dispositif d'arrêt (26) pour le palpeur (7) ou pour des éléments raccordées à celui-ci.

9. Appareil de soudage au laser selon la revendication 7, caractérisé en ce que le dispositif d'arrêt comporte une vis d'ajustage (26).

10. Appareil de soudage au laser selon l'une quelconque des revendications 1 à 9, caractérisé en ce que le palpeur est réalisé sous forme de galet palpeur (7).

# Fig.1

Fig.2

Fig.3

Fig.4

# Fig.5

Fig. 6

Fig. 7

Fig. 8